# EUROPEAN PATENT APPLICATION

(11) **EP 4 484 334 A1**
(43) Date of publication of application: **01.01.2025**
(21) Application number: 23763416.7
(22) Date of filing: 28.02.2023
(51) Int. Cl.: B65G 1/00

(54) **TRANSPORT FACILITY**

(30) Priority: 01.03.2022 JP 2022030848
(71) Applicant: Daifuku Co., Ltd., Osaka-shi, Osaka 555-0012 (JP)
(72) Inventor: IWATA Masashige, Gamo-gun, Shiga 529-1692 (JP); KIMURA Kazunari, Gamo-gun, Shiga 529-1692 (JP); NAKAMURA Hiroaki, Gamo-gun, Shiga 529-1692 (JP)
(74) Representative: Grosse, Felix Christopher
(86) International application number: PCT/JP2023/007190
(87) International publication number: WO 2023/167158

(57) **Abstract**

A transport carriage (1) includes: a pair of drive wheels (12) respectively provided with wheel gear sections (12g) configured to mesh with rail gear sections (30) of a pair of drive rails (3); a pair of first auxiliary wheels (15) configured to be respectively guided in a pair of auxiliary rails (4); and a pair of second auxiliary wheels (16) configured to be respectively guided in the pair of auxiliary rails (4). The pair of first auxiliary wheels (15) and the pair of second auxiliary wheels (16) being non-driven wheels supported in a manner as to rotate with respect to a body (10), and at least two pairs of the pair of drive wheels (12), the pair of first auxiliary wheels (15), and the pair of second auxiliary wheels (16) are located at different positions in an up-down direction.

## Description

### Technical Field

The present invention relates to a transport facility including a transport carriage configured to transport articles and a transport path with a lift path section on which the transport carriage moves up and down.

### Background Art

An example of such a transport facility is disclosed in JP 2021-088465A (Patent Document 1). Hereinafter, the reference signs given in the parentheses in "Background Art" correspond to those used in Patent Document 1.

In the facility disclosed in Patent Document 1, a transport carriage (200) that moves up and down along a track (110) is configured to transport articles between a picking station (310) and a plurality of transshipment positions (375). The picking station (310) and the plurality of transshipment positions (375) are provided at positions spaced apart from each other in an up-down direction. The plurality of transshipment positions (375) are also provided at positions spaced apart from each other in the up-down direction. By moving up and down along the track (110), the transport carriage (200) can transport articles to and from the plurality of transfer target places (310, 375), which are spaced apart from each other in the up-down direction.

The transport carriage (200) has four drive wheels (220) disposed in a virtual horizontal plane. Each of the four drive wheels (220) has a gear (222) configured to mesh with a rack (156) provided along the track (110). With this, the four drive wheels (220) are all supported on the track (110) and the posture of the transport carriage (220) is maintained.

### Prior Art Document

### Patent Document

Patent Document 1: JP 2021-088465A

### Disclosure of the Invention

### Problem to be Solved by the Invention

As described above, in the technology disclosed in Patent Document 1, all the four wheels provided on the transport carriage (200) are drive wheels (220), so there is a problem that the number of drive sources such as a motor mounted on the transport carriage (200) tends to increase, resulting in high costs.

In view of the above circumstances, there is a demand for realizing a technology that can appropriately maintain the posture of a transport carriage that moves up and down on a lift path section, while realizing a cost reduction.

### Means for Solving Problem

A transport facility includes: a transport carriage configured to transport an article; and a transport path with a lift path section on which the transport carriage moves up and down,
letting a specific direction along a horizontal plane be a first direction, a direction orthogonal to the first direction in a plan view be a second direction, a direction along the transport path be a transport direction, and a direction orthogonal to the transport direction in a second direction view, which is a view along the second direction, be a transport width direction,
the transport path including: a pair of drive rails extending in the transport direction and spaced apart from each other in the second direction; and a pair of auxiliary rails spaced apart from each other in the second direction and located at positions in the transport width direction different from positions at which the pair of drive rails are located,
the drive rails each including a rail gear section extending in the transport direction,
the auxiliary rails each including a pair of guide surfaces extending in the transport direction and facing each other in the transport width direction,
the transport carriage including: a body located between the pair of drive rails in the second direction and between the pair of auxiliary rails in the second direction; a transfer section configured to transfer the article between transfer target places; a pair of drive wheels respectively provided with wheel gear sections configured to mesh with the rail gear sections of the pair of drive rails; a pair of first auxiliary wheels configured to be respectively guided in the pair of auxiliary rails; and a pair of second auxiliary wheels configured to be respectively guided in the pair of auxiliary rails,
the pair of drive wheels being coupled to a drive shaft protruding from the body outward in the second direction,
the pair of first auxiliary wheels and the pair of second auxiliary wheels being non-driven wheels supported in a manner as to rotate with respect to the body, and
at least two pairs of the pair of drive wheels, the pair of first auxiliary wheels, and the pair of second auxiliary wheels are located at different positions in an up-down direction.

According to this configuration, on each of two sides of the transport carriage in the second direction, the drive wheel, the first auxiliary wheel, and the second auxiliary wheel are supported on the corresponding rails. With this, a three-point support with the three wheels is realized on each of two sides of the transport carriage in the second direction. Also, at least two of the drive wheel, the first auxiliary wheel, and the second auxiliary wheel are located at different positions in the up-down direction. That is, since at least two wheels are supported at different positions in the up-down direction, it is easy to prevent the transport carriage from tilting in the up-down direction. Accordingly, it is possible to appropriately maintain the posture of the transport carriage that moves up and down on the lift path section. Furthermore, according to this configuration, since the pair of first auxiliary wheels and the pair of second auxiliary wheels are non-driven wheels, the number of drive sources mounted on the transport carriage can be reduced. It is thus possible to reduce the cost of the transport carriage.

Further features and advantages of the technique according to the present disclosure will become apparent from the following description of exemplary and non-limiting embodiments given with reference to the drawings.

### Brief Description of the Drawings

FIG. 1 is a diagram of a transport facility viewed in a second direction.
FIG. 2 is a diagram of a transport carriage viewed in the second direction.
FIG. 3 is a cross-sectional view taken along III-III in FIG. 2.
FIG. 4 is a cross-sectional view taken along IV-IV in FIG. 1.
FIG. 5 is a cross-sectional view taken along V-V in FIG. 1.
FIG. 6 is a diagram viewed in a direction of an arrow VI in FIG. 5.
FIG. 7 is a diagram of the transport carriage viewed in the second direction according to another embodiment.
FIG. 8 is a diagram of the transport carriage viewed in the second direction according to yet another embodiment.

### Best Mode for Carrying out the Invention

A transport facility is a facility for transporting articles. Articles to be transported may be containers (such as folding containers and cardboard boxes) storing commercial products, pallets on which commercial products are placed, or commercial products themselves. Note that commercial products include finished products and products in progress. The following will describe an embodiment of a transport facility with reference to the drawings.

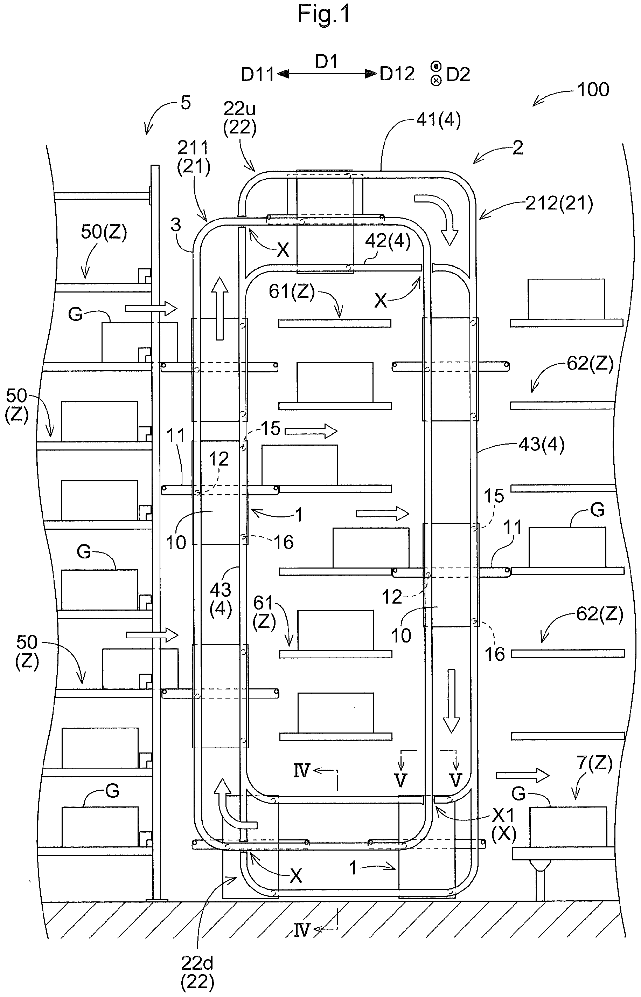

As shown in FIG. 1, a transport facility 100 includes a transport carriage 1 configured to transport articles G and a transport path 2 with a lift path section 21 on which the transport carriage 1 moves up and down. In the shown example, the transport facility 100 includes a plurality of transport carriages 1 that move on the same transport path 2.

In the following description, a specific direction along a horizontal plane is defined as a "first direction D1" and a direction orthogonal to the first direction D1 in a plan view is defined as a "second direction D2". In this example, the horizontal direction orthogonal to the first direction D1 is defined as the second direction D2. Also, one side in the first direction D1 is defined as a "first side D11 in the first direction" and the other side in the first direction D1 is defined as a "second side D12 in the first direction". Also, a direction along the transport path 2 is defined as a "transport direction Dt", and a direction orthogonal to the transport direction Dt in a second direction D2 view, which is a view along the second direction D2, is defined as a "transport width direction Dw".

In the present embodiment, the transport path 2 includes a connection path section 22 connected to the lift path section 21. The connection path section 22 extends along a direction intersecting with the up-down direction. In this example, the connection path section 22 extends in a direction orthogonal to the lift path section 21. Specifically, the lift path section 21 extends in the vertical direction and the connection path section 22 extends in the horizontal direction.

In the present embodiment, the lift path section 21 includes a first lift path section 211, and a second lift path section 212 spaced apart from the first lift path section 211 to the second side D12 in the first direction. The first lift path section 211 and the second lift path section 212 are spaced apart from each other in the first direction D1, at the same position in the second direction D2. The first lift path section 211 and the second lift path section 212 are disposed in parallel to each other. The dimension of the first lift path section 211 in the extending direction (up-down direction) is equal to the dimension of the second lift path section 212 in the extending direction (up-down direction).

In the present embodiment, the connection path section 22 includes an upper connection path section 22u connecting an upper end portion of the first lift path section 211 and an upper end portion of the second lift path section 212, and a lower connection path section 22d connecting a lower end portion of the first lift path section 211 and a lower end portion of the second lift path section 212. The upper connection path section 22u and the lower connection path section 22d are spaced apart from each other in the up-down direction, at the same position in the second direction D2. The upper connection path section 22u and the lower connection path section 22d are disposed in parallel to each other. The dimension of the upper connection path section 22u in the extending direction (first direction D1) is equal to the dimension of the lower connection path section 22d in the extending direction (first direction D1).

In the present embodiment, the transport path 2 forms a circulation path in which the transport carriage 1 circulates in one direction in a manner as to pass through a plurality of transfer target places Z. In this example, as a result of the first lift path section 211, the upper connection path section 22u, the second lift path section 212, and the lower connection path section 22d being arranged continuously with each other in the transport direction Dt, a loop-shaped circulation path is formed when viewed in the second direction D2.

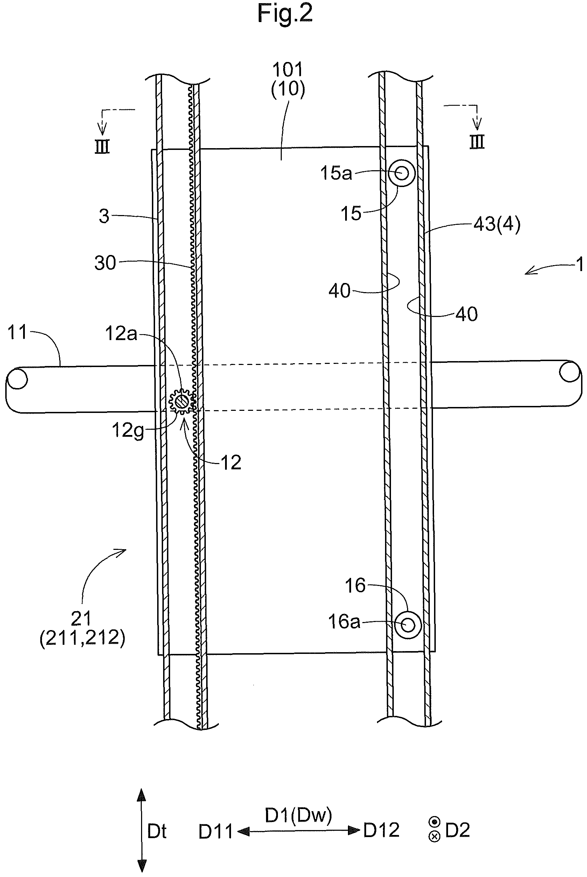

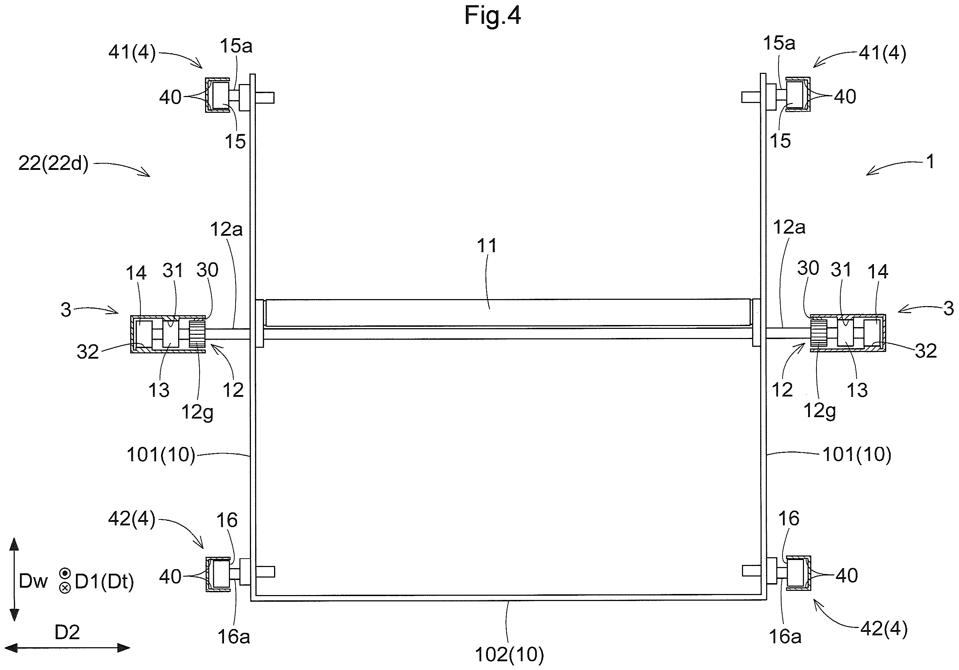

In this way, the transport path 2 forms a loop-shaped circulation path when viewed in the second direction D2. Accordingly, the "transport direction Dt" defined in the above description, that is, "direction along the transport path 2" depends on which position in the transport path 2 is used as a reference. Specifically, as shown in FIG. 1, in the lift path section 21 (the first lift path section 211 and the second lift path section 212) of the transport path 2, the transport direction Dt corresponds to the up-down direction (see also FIG. 2). On the other hand, in the connection path section 22 (the upper connection path section 22u and the lower connection path section 22d) of the transport path 2, the transport direction Dt corresponds to the first direction D1 (see also FIG. 4).

Also, the "transport width direction Dw" defined in the above description, that is, "direction orthogonal to the transport direction Dt when viewed in the second direction D2" also depends on which position in the transport path 2 is used as a reference. Specifically, as shown in FIG. 1, in the lift path section 21 (the first lift path section 211 and the second lift path section 212) of the transport path 2, the transport width direction Dw corresponds to the first direction D1 (see also FIG. 2). On the other hand, in the connection path section 22 (the upper connection path section 22u and the lower connection path section 22d) of the transport path 2, the transport width direction Dw corresponds to the up-down direction (see also FIG. 4).

At a position adjacent to the transport path 2, a transfer target place Z at which an article G is transferred to or from the transport carriage 1 is provided. Such transfer target places Z are disposed at a plurality of positions in the transport direction Dt.

In the present embodiment, a holding apparatus 5 is provided at a position adjacent to the first lift path section 211 on the first side D11 in the first direction, the holding apparatus 5 including a plurality of holding sections 50 that hold articles G successively transported to the holding sections. The holding sections 50 are transfer target places Z. Specifically, each holding section 50 is a transfer target place Z. The holding apparatus 5 is, for example, an apparatus for unloading articles G stored in an automated warehouse. In this case, articles G to be unloaded from the automated warehouse are successively transported to the holding sections 50.

The plurality of holding sections 50 are lined up in the transport direction Dt. In this example, the plurality of holding sections 50 are lined up in the up-down direction.

Each of the plurality of holding sections 50 is configured to transport articles G to the second side D12 in the first direction. With this, each of the plurality of holding sections 50 can successively transport articles G to a position adjacent to the transport path 2 and can deliver the articles G to the transport carriages 1. For example, each of the plurality of holding sections 50 is provided with a conveyor for transporting articles G in the first direction D1.

In the present embodiment, a discharge section 7 for discharging articles G to the outside is provided at a position in the transport path 2. The discharge section 7 is a transfer target place Z. In this example, the discharge section 7 is located adjacent to the transport path 2 (specifically, the second lift path section 212) on the second side D12 in the first direction.

The discharge section 7 is configured to transport articles G to the second side D12 in the first direction. With this, the discharge section 7 can appropriately receive articles G from the transport carriages 1 and can transport the received articles G to a site where the next process is to be performed (e.g., a site where picking work is to be performed to extract products from the articles G), and the like. For example, the discharge section 7 is provided with a conveyor for transporting the articles G in the first direction D1.

In the present embodiment, a temporary storage section 61 capable of temporarily storing an article G is provided between the first lift path section 211 and the second lift path section 212 in the first direction D1. That is, the temporary storage section 61 is provided on the second side D12 in the first direction with respect to the first lift path section 211 and is provided on the first side D11 in the first direction with respect to the second lift path section 212. The temporary storage section 61 is a transfer target place Z.

In the present specification, the temporary storage section 61 is referred to as a "first temporary storage section 61". In this example, a plurality of such first temporary storage sections 61 are lined up in the transport direction Dt. In the shown example, the plurality of first temporary storage sections 61 are lined up in the up-down direction. The plurality of first temporary storage sections 61 are disposed between one of the holding sections 50 and the discharge section 7, in the transport path 2.

Each of the plurality of first temporary storage sections 61 is configured to transport an article G in the first direction D1. With this, each of the plurality of first temporary storage sections 61 can receive an article G from the transport carriage 1 located on the first lift path section 211 and can deliver the article G to the transport carriage 1 located on the second lift path section 212. For example, each of the plurality of first temporary storage sections 61 is provided with a conveyor for transporting articles G in the first direction D1.

In the present embodiment, a second temporary storage section 62 capable of temporarily storing an article G is provided on the second side D12 in the first direction with respect to the second lift path section 212. The second temporary storage section 62 is a transfer target place Z. In this example, a plurality of such second temporary storage sections 62 are lined up in the transport direction Dt. In the shown example, the plurality of second temporary storage sections 62 are lined up in the up-down direction. The plurality of second temporary storage sections 62 are disposed between the plurality of holding sections 50 (specifically, the holding section 50 disposed at the most downstream end) and the discharge section 7, in the transport path 2.

Each of the plurality of second temporary storage sections 62 is configured to transport an article G in the first direction D1. With this, each of the plurality of second temporary storage sections 62 can receive and deliver an article G from and to the transport carriage 1 located on the second lift path section 212. For example, each of the plurality of second temporary storage sections 62 is provided with a conveyor for transporting articles G in the first direction D1.

The transport carriage 1 is configured to transport an article G held in one of the plurality of holding sections 50 to the discharge section 7. The transport facility 100 includes a control system (not shown), and the transport carriage 1 is controlled according to each process executed by the control system.

For example, the control system executes relay discharge processing. Through the execution of the relay discharge processing, the transport carriage 1 receives, from the holding section 50, an article G (hereinafter, referred to as "target article G") to be transported to the discharge section 7, delivers the received target article G to one of the first temporary storage sections 61 on the first lift path section 211, then receives the target article G from the first temporary storage section 61 on the second lift path section 212, and delivers the received target article G to the discharge section 7. That is, while the transport carriage 1 is on the first lift path section 211, the transport carriage 1 receives the target article G from the holding section 50 and delivers it to the first temporary storage section 61. While the transport carriage 1 is on the second lift path section 212, the transport carriage 1 receives, from the first temporary storage section 61, the target article G that has just been delivered to the first temporary storage section 61, and delivers it to the discharge section 7. The above-described relay discharge processing is executed on the condition that an empty first temporary storage section 61 to which the target article G can be delivered is present among the plurality of first temporary storage sections 61.

For example, the control system executes intermediate transport processing. Intermediate transport processing is processing that is executed during relay discharge processing. Specifically, after the transport carriage 1 has delivered the article G received from the holding section 50 to the first temporary storage section 61 through the execution of the relay discharge processing, the intermediate transport processing is executed. Through the execution of the intermediate transport processing, the transport carriage 1 receives, during the relay discharge processing, an article G (hereinafter, referred to as "non-target article G") that is different from the target article G from one of the holding sections 50 and delivers the received non-target article G to an empty first or second temporary storage section 61 or 62. Then, the relay discharge processing is restarted, and the transport carriage 1 receives, on the second lift path section 212, the target article G from the first temporary storage section 61, and delivers it to the discharge section 7. The above-described intermediate transport processing is executed on the condition that an empty first or second temporary storage section 61 or 62 to which the non-target article G can be delivered is present among the plurality of first temporary storage sections 61 and the plurality of second temporary storage sections 62.

For example, the control system executes direct discharge processing. Through the execution of the direct discharge processing, the transport carriage 1 receives the target article G from the holding section 50, directly transports the received target article G to the discharge section 7, and delivers it to the discharge section 7. The above-described direct discharge processing is executed on the condition that there is no empty first temporary storage section 61 to which the target article G can be delivered.

The following will describe specific structures of the transport carriage 1 and the transport path 2.

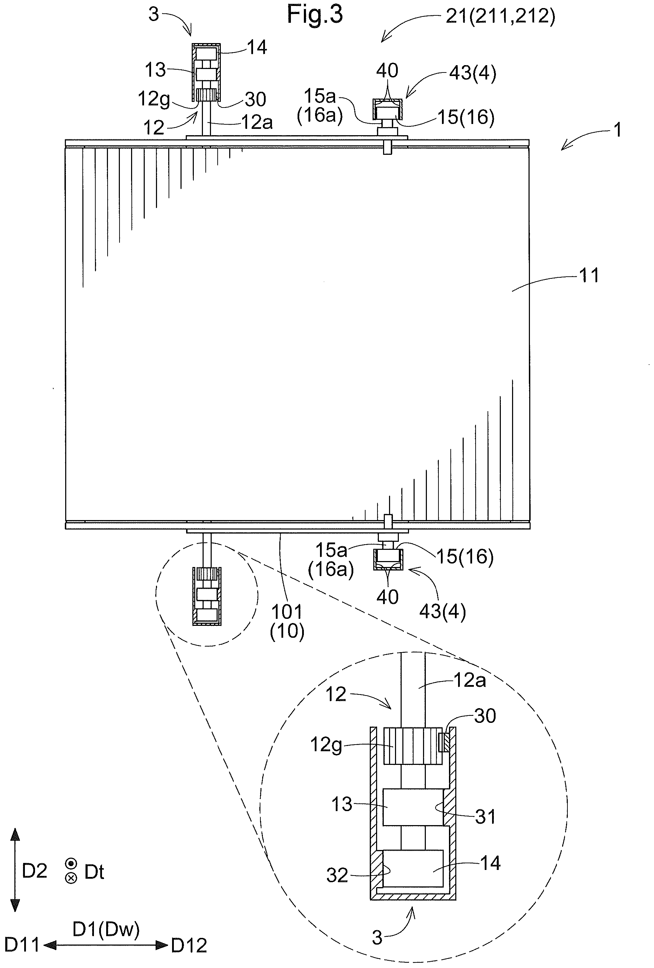

FIG. 2 shows a part of the first lift path section 211. FIG. 3 is a cross-sectional view taken along III-III in FIG. 2. FIG. 4 is a cross-sectional view taken along IV-IV in FIG. 1 and shows a part of the lower connection path section 22d.

As shown in FIGS. 2 to 4, the transport path 2 includes a pair of drive rails 3 extending in the transport direction Dt and spaced apart from each other in the second direction D2, and a pair of auxiliary rails 4 spaced apart from each other in the second direction D2 and located at positions in the transport width direction Dw different from positions at which the pair of drive rails 3 are provided.

In the present embodiment, the drive rails 3 are arranged along the first lift path section 211, the upper connection path section 22u, the second lift path section 212, and the lower connection path section 22d in a manner as to form a loop shape when viewed in the second direction D2 (see FIG. 1).

In the present embodiment, each drive rail 3 has an inner space where a drive wheel 12 of the transport carriage 1 is disposed. In this example, the drive rail 3 has a shape with only the inner side of the drive rail 3 in the second direction D2 open (see FIGS. 3 and 4). With this, the drive wheel 12 supported by a drive shaft 12a protruding outward in the second direction D2 from a body 10 of the transport carriage 1 is appropriately positioned inside the drive rail 3.

The drive rail 3 has a rail gear section 30 extending in the transport direction Dt. The rail gear section 30 is configured to mesh with the drive wheel 12 of the transport carriage 1. In the present embodiment, the rail gear section 30 is formed on a surface, inside of the drive rail 3, that faces one side in the transport width direction Dw.

The auxiliary rails 4 are arranged along the first lift path section 211, the upper connection path section 22u, the second lift path section 212, and the lower connection path section 22d in a manner as to form a loop shape when viewed in the second direction D2 (see FIG. 1).

In the present embodiment, each auxiliary rail 4 has an inner space where a first auxiliary wheel 15 or a second auxiliary wheel 16 of the transport carriage 1 is disposed. In this example, the auxiliary rail 4 has a shape with only the inner side of the auxiliary rail 4 in the second direction D2 open (see FIGS. 3 and 4). With this, the first auxiliary wheel 15 supported by a first auxiliary shaft 15a protruding outward in the second direction D2 from the body 10 of the transport carriage 1 or the second auxiliary wheel 16 supported by a second auxiliary shaft 16a protruding outward in the second direction D2 from the body 10 of the transport carriage 1 is appropriately positioned inside the auxiliary rail 4.

The auxiliary rail 4 has a pair of guide surfaces 40 extending along the transport direction Dt and facing each other in the transport width direction Dw. The pair of guide surfaces 40 are configured to guide the first auxiliary wheel 15 and the second auxiliary wheel 16 of the transport carriage 1 along the transport direction Dt. The pair of guide surfaces 40 are formed in a manner as to face each other in the transport width direction Dw inside the auxiliary rail 4. The distance between the pair of guide surfaces 40 in the transport width direction Dw is set to a distance at which the first auxiliary wheel 15 or the second auxiliary wheel 16 does not come into contact with both of the guide surfaces 40 at the same time. The first auxiliary wheel 15 and the second auxiliary wheel 16 of the transport carriage 1 are disposed between the pair of guide surfaces 40 in the transport width direction Dw.

The transport carriage 1 includes the body 10 located between the pair of drive rails 3 in the second direction D2 and between the pair of auxiliary rails 4 in the second direction D2, a transfer section 11 for transferring articles G between the transfer target places Z, the drive wheels 12 respectively provided with wheel gear sections 12g that mesh with the rail gear sections 30 of the pair of drive rails 3, the first auxiliary wheels 15 that are respectively guided in the pair of auxiliary rails 4, and the second auxiliary wheels 16 that are respectively guided in the pair of auxiliary rails 4.

In the present embodiment, the body 10 includes, on each of two sides in the second direction D2, a body support section 101 that supports the drive wheel 12, the first auxiliary wheel 15, and the second auxiliary wheel 16. In this example, the body support section 101 supports the drive wheel 12 via the drive shaft 12a to which the drive wheel 12 is coupled. Also, the body support section 101 supports the first auxiliary wheel 15 via the first auxiliary shaft 15a to which the first auxiliary wheel 15 is coupled. Furthermore, the body support section 101 supports the second auxiliary wheel 16 via the second auxiliary shaft 16a to which the second auxiliary wheel 16 is coupled.

In the present embodiment, the body support section 101 is plate-shaped extending along the surface orthogonal to the second direction D2. The pair of body support sections 101 are spaced apart from each other in the second direction D2. In the present embodiment, the body 10 includes a body coupling section 102 coupling the pair of body support sections 101 to each other (see FIG. 4). In this example, the body coupling section 102 couples lower end portions of the pair of body support sections 101 to each other. Also, the body coupling section 102 is plate-shaped extending along the horizontal plane.

The transfer section 11 is configured to move an article G in the first direction D1. With this, the transfer section 11 is capable of transferring articles G to and from the transfer target places Z located adjacent to the transport carriage 1 in the first direction D1. In this example, the transfer section 11 is constituted by a conveyor. However, the transfer section 11 may be constituted by a well-known transfer means including a fork mechanism, a chuck mechanism, or the like.

The pair of drive wheels 12 are coupled to the drive shaft 12a protruding outward in the second direction D2 from the body 10. The drive wheels 12 are configured to rotate about an axis extending in the second direction D2. The drive shaft 12a is driven to rotate by a drive source such as a motor (not shown). In the example shown in FIG. 4, the pair of drive wheels 12 are coupled to a common drive shaft 12a. However, each of the pair of drive wheels 12 may be connected to a separate drive shaft 12a.

The pair of first auxiliary wheels 15 and the pair of second auxiliary wheels 16 are non-driven wheels that are supported in a manner as to rotate with respect to the body 10. The first auxiliary wheels 15 and the second auxiliary wheels 16 are configured to rotate about an axis extending in the second direction D2. The first auxiliary wheels 15 and the second auxiliary wheels 16 are each disposed between the pair of guide surfaces 40 provided on the auxiliary rail 4 and are configured to rotate in response to coming into contact with the guide surfaces 40. As described above, since the pair of first auxiliary wheels 15 and the pair of second auxiliary wheels 16 are non-driven wheels, the number of drive sources mounted on the transport carriage 1 can be reduced. It is thus possible to reduce the cost of the transport carriage 1.

As shown in FIG. 2, at least two of the drive wheel 12, the first auxiliary wheel 15, and the second auxiliary wheel 16 are located at different positions in the up-down direction. That is, on each of two sides of the transport carriage 1 in the second direction D2, at least two wheels are supported by the drive rail 3 or the auxiliary rail 4 at different positions in the up-down direction. Accordingly, it is easy to prevent the transport carriage 1 from tilting in the up-down direction.

In the present embodiment, the drive wheel 12, the first auxiliary wheel 15, and the second auxiliary wheel 16 are located at different positions in the up-down direction. That is, on each of two sides of the transport carriage 1 in the second direction D2, three wheels are supported at different positions in the up-down direction. In this example, at a position spaced apart from the drive wheel 12 to the second side D12 in the first direction, the first auxiliary wheel 15 and the second auxiliary wheel 16 are spaced apart from each other in the up-down direction. Also, the drive wheel 12 is disposed between the first auxiliary wheel 15 and the second auxiliary wheel 16 in the up-down direction. With this, a moment of force for tilting of the transport carriage 1 in the up-down direction can be received by the first auxiliary wheels 15 and the second auxiliary wheels 16 contacting the guide surfaces 40. This can thus prevent a load occurring due to the tilting of the transport carriage 1 from being applied to the drive wheels 12. Accordingly, it is easy to appropriately apply a propulsive force for the transport carriage 1 to move along the transport path 2, while preventing the transport carriage 1 from tilting. Note that, in this example, the first auxiliary wheel 15 and the second auxiliary wheel 16 are disposed at the same position in the first direction D1 while being spaced apart from each other in the up-down direction.

In the present embodiment, the drive rails 3 and the auxiliary rails 4 are arranged so that the drive wheels 12, the first auxiliary wheels 15, and the second auxiliary wheel 16 have the same positional relationship in the first direction D1 and the up-down direction between the lift path section 21 (the first lift path section 211 and the second lift path section 212) and the connection path section 22 (the upper connection path section 22u and the lower connection path section 22d). In other words, the relative positions of the drive wheel 12, the first auxiliary wheel 15, and the second auxiliary wheel 16 are fixed regardless of the position of the transport carriage 1 on the transport path 2. Accordingly, the transport carriage 1 moves along the transport path 2 while maintaining its posture.

In the present embodiment, the drive wheel 12 is always located on the first side D11 in the first direction with respect to both the first auxiliary wheel 15 and the second auxiliary wheel 16. Also, the drive wheel 12 is always located between the first auxiliary wheel 15 and the second auxiliary wheel 16 in the up-down direction. The first auxiliary wheel 15 and the second auxiliary wheel 16 are always located on the second side D12 in the first direction with respect to the drive wheel 12. The first auxiliary wheel 15 is always located above the second auxiliary wheel 16. In contrast, the second auxiliary wheel 16 is always located below the first auxiliary wheel 15.

As shown in FIGS. 1 to 4, in the present embodiment, the auxiliary rails 4 include first auxiliary wheel passage sections 41 through which only the first auxiliary wheels 15 pass, second auxiliary wheel passage sections 42 through which only the second auxiliary wheels 16 pass, and two-wheel passage sections 43 through which both the first auxiliary wheels 15 and the second auxiliary wheels 16 pass.

As shown in FIGS. 1 and 4, the first auxiliary wheel passage sections 41 and the second auxiliary wheel passage sections 42 are provided in the connection path section 22 (the upper connection path section 22u and the lower connection path section 22d). In the connection path section 22, the first auxiliary wheel passage section 41 and the second auxiliary wheel passage section 42 are disposed along the first direction D1 in parallel to each other and located at different positions in the up-down direction. Both the first auxiliary wheel passage sections 41 and the second auxiliary wheel passage sections 42 are continuous with the two-wheel passage sections 43 at connection portions between the connection path section 22 and the lift path section 21. In this example, the first auxiliary wheel passage sections 41 and the second auxiliary wheel passage sections 42 are curved, when viewed in the second direction D2, at the connection portions between the connection path section 22 and the lift path section 21. With this, the first auxiliary wheel passage sections 41 and the second auxiliary wheel passage sections 42 extending in the first direction D1 are formed in a manner as to be continuous with the two-wheel passage sections 43 extending in the up-down direction at a gentle angle.

As shown in FIGS. 1 to 3, the two-wheel passage sections 43 are located in the lift path section 21 (the first lift path section 211 and the second lift path section 212). In this example, the two-wheel passage sections 43 extend in the up-down direction in the lift path section 21. The first auxiliary wheels 15 passing through the first auxiliary wheel passage section 41 and the second auxiliary wheels 16 passing through the second auxiliary wheel passage section 42 in the connection path section 22 both enter the two-wheel passage section 43 in the lift path section 21. Also, the first auxiliary wheels 15 and the second auxiliary wheels 16 passing through the two-wheel passage section 43 in the lift path section 21 separately enter the first auxiliary wheel passage section 41 and the second auxiliary wheel passage section 42 of the connection path section 22, respectively. As described above, the relative positions between the drive wheels 12, the first auxiliary wheels 15, and the second auxiliary wheels 16 are fixed. Accordingly, when the transport carriage 1 enters the connection path section 22 from the lift path section 21, the first auxiliary wheels 15 enter the first auxiliary wheel passage section 41, which the first auxiliary wheels 15 should enter, and the second auxiliary wheels 16 enter the second auxiliary wheel passage section 42, which the second auxiliary wheels 16 should enter.

As shown in FIGS. 3 and 4, in the present embodiment, for each of the pair of drive wheels 12, a first restriction wheel 13 and a second restriction wheel 14 are provided coaxially with respect to the drive shaft 12a to restrict the position of the corresponding one of the pair of drive wheels 12 with respect to the corresponding drive rail 3. In this example, on each of two sides of the transport carriage 1 in the second direction D2, the first restriction wheel 13 and the second restriction wheel 14 are connected to the common drive shaft 12a. That is, in this example, the pair of drive wheels 12, the pair of first restriction wheels 13, and the pair of second restriction wheels 14 are coupled to the drive shaft 12a. However, the first restriction wheels 13 and the second restriction wheels 14 are configured to spin free around the drive shaft 12a, and no driving force from the drive shaft 12a is transmitted to the first restriction wheels 13 and the second restriction wheels 14.

In the present embodiment, each drive rail 3 includes a first restriction surface 31 that extends in the transport direction Dt and restricts a movement of the first restriction wheel 13 to one side in the transport width direction Dw, and a second restriction surface 32 that extends in the transport direction Dt and restricts a movement of the second restriction wheel 14 to the other side in the transport width direction Dw. As a result of the movements of the first restriction wheel 13 and the second restriction wheel 14 coupled to the drive shaft 12a in the transport width direction Dw being restricted by the first restriction surface 31 and the second restriction surface 32, the position of the drive shaft 12a with respect to the drive rail 3 in the transport width direction Dw can be restricted within a certain range. Accordingly, the position of the drive wheel 12 coupled to the drive shaft 12a with respect to the drive rail 3 in the transport width direction Dw can be stabilized. Therefore, it is easy to stabilize the state of meshing between the wheel gear section 12g of the drive wheel 12 and the rail gear section 30 of the drive rail 3.

Here, if the first restriction wheel 13 attempts to move to one side in the transport width direction Dw, the first restriction wheel 13 will come into contact with the first restriction surface 31 and will roll on the first restriction surface 31. If the second restriction wheel 14 attempts to move to the other side in the transport width direction Dw, the second restriction wheel 14 will come into contact with the second restriction surface 32 and will roll on the second restriction surface 32. In this case, the first restriction wheel 13 rolling on the first restriction surface 31 and the second restriction wheel 14 rolling on the second restriction surface 32 will rotate in opposite directions. However, in this example, as described above, the first restriction wheel 13 and the second restriction wheel 14 are configured to spin free around the drive shaft 12a, so that even if the first restriction wheel 13 and the second restriction wheel 14 rotate in opposite directions, they do not interfere with the transport carriage 1 when it moves along the transport path 2. This allows the first restriction wheel 13 and the second restriction wheel 14 to appropriately achieve the function of adjusting the position of the drive wheel 12.

In the present embodiment, the pair of drive rails 3 are provided on the outer side of the pair of auxiliary rails 4 in the second direction D2. Also, as described above, the drive wheels 12 are coupled to the drive shaft 12a protruding outward in the second direction D2 from the body 10. Accordingly, as shown in FIG. 1, at an intersection X at which the drive rail 3 and the auxiliary rail 4 intersect with each other when viewed in the second direction D2, the drive shaft 12a protruding outward in the second direction D2 from the body 10 may interfere with the auxiliary rail 4.

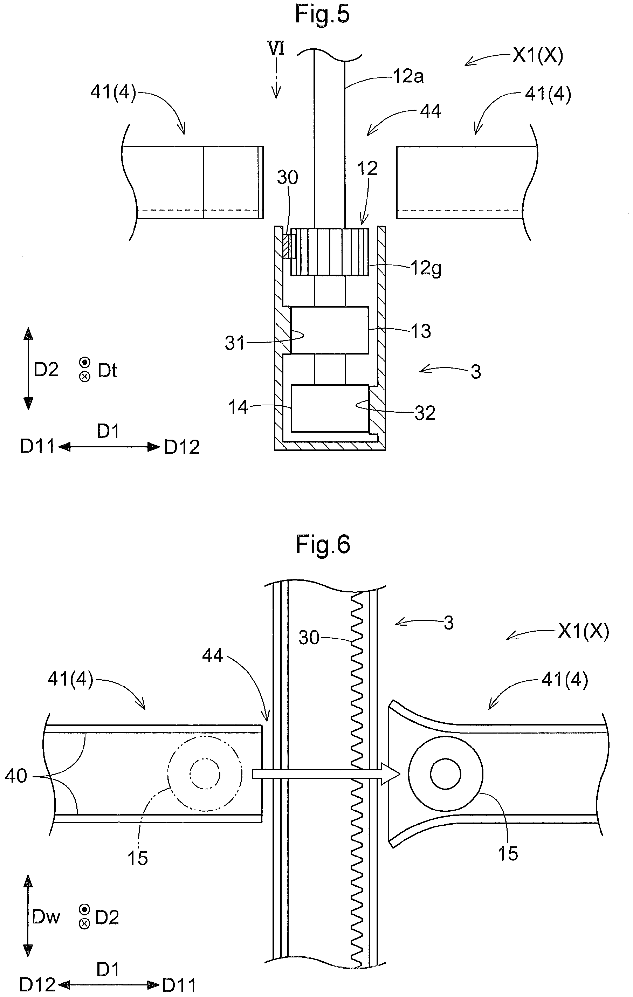

However, in the present embodiment, a cut-off section 44 that separates the auxiliary rail 4 is provided at the intersection X (see FIG. 1) at which the drive rail 3 and the auxiliary rail 4 intersects with each other when viewed in the second direction D2. As shown in FIG. 5, the cut-off section 44 is formed in a manner as to prevent a movement track of the drive shaft 12a when the drive wheel 12 passes through the intersection X from interfering with the auxiliary rail 4. With this configuration, when the drive wheel 12 passes through the intersection X at which the drive rail 3 and the auxiliary rail 4 intersects with each other, it is possible to prevent the drive shaft 12a from interfering with the auxiliary rail 4. Also, by separating the auxiliary rail 4 with the cut-off section 44 at the intersection X, the drive rail 3 can realize a continuous rail configuration without any separated part over the transport path 2. Therefore, a propulsive force for the transport carriage 1 to move along the transport path 2 can be applied appropriately to any position of the transport path 2. In this example, as shown in FIG. 1, the transport path 2 has intersections X at four respective positions. Each of the four intersections X is provided with a cut-off section 44. FIGS. 5 and 6 show, among the four intersections X, an intersection X1 at which the lower connection path section 22d and the second lift path section 212 intersect with each other.

In a configuration with the cut-off section 44 in the auxiliary rail 4, the first auxiliary wheel 15 and the second auxiliary wheel 16 that are being guided and moving on the auxiliary rail 4 will once disengage from the auxiliary rail 4 at the cut-off section 44 and re-enter the auxiliary rail 4. If the first auxiliary wheel 15 and the second auxiliary wheel 16 are misaligned with the auxiliary rails 4 when they re-enter the auxiliary rails 4, they may not be able to appropriately re-enter the auxiliary rails 4.

Therefore, as shown in FIG. 6, in the present embodiment, the pair of guide surfaces 40 of the auxiliary rail 4 have, downstream of the cut-off section 44, a portion where an opposing distance of the pair of guide surfaces 40 in the transport width direction Dw gradually increases toward the cut-off section 44. Accordingly, when the first auxiliary wheel 15 and the second auxiliary wheel 16 that are being guided and moving on the auxiliary rail 4 once disengage from the auxiliary rail 4 at the cut-off section 44 and re-enter the auxiliary rail 4, the first auxiliary wheel 15 and the second auxiliary wheel 16 can be appropriately guided on the auxiliary rail 4. As described above, although FIG. 6 shows the intersection X1 at which the lower connection path section 22d and the second lift path section 212 intersect with each other, the auxiliary rails 4 have the same configuration at the other three intersections X. Note that FIG. 6 shows a state when FIG. 1 is viewed from the rear side of the paper sheet toward the front side.

According to the above-described transport facility 100, at least two of the drive wheel 12, the first auxiliary wheel 15, and the second auxiliary wheel 16 are arranged at different positions in the up-down direction, and thus it is easy to prevent the transport carriage 1 from tilting in the up-down direction. Accordingly, it is possible to appropriately maintain the posture of the transport carriage 1 that moves up and down on the lift path section 21. Also, since the pair of first auxiliary wheels 15 and the pair of second auxiliary wheels 16 are non-driven wheels, the number of drive sources mounted on the transport carriage 1 can be reduced. It is thus possible to reduce the cost of the transport carriage 1.

### [Other Embodiments]

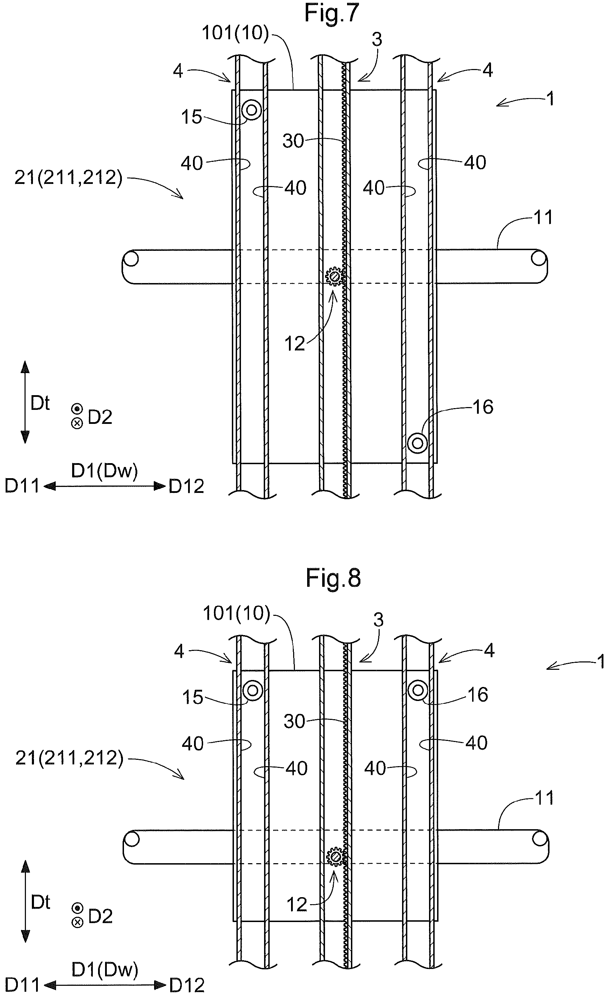

The following will describe other embodiments of the transport facility.
(1) The foregoing embodiment has described an example in which, at a position spaced apart from the drive wheel 12 to the second side D12 in the first direction, the first auxiliary wheel 15 and the second auxiliary wheel 16 are spaced apart from each other in the up-down direction. However, the present invention is not limited to this example, and a configuration is also possible in which, as shown in FIG. 7, the first auxiliary wheel 15 is arranged on the first side D11 in the first direction with respect to the drive wheel 12, and the second auxiliary wheel 16 is arranged on the second side D12 in the first direction with respect to the drive wheel 12. That is, in this case, the drive wheel 12 is placed between the first auxiliary wheel 15 and the second auxiliary wheel 16 in the first direction D1. Note that in the example shown in FIG. 7, the auxiliary rails 4 include, in the lift path section 21, the passage sections through which the first auxiliary wheel 15 and the second auxiliary wheel 16 are separately pass. With this, even when the first auxiliary wheel 15 and the second auxiliary wheel 16 are arranged at different positions in the first direction D1, it is possible to appropriately support the first auxiliary wheel 15 and the second auxiliary wheel 16 using the auxiliary rails 4.
(2) The foregoing embodiment has described an example in which the drive wheel 12 is provided between the first auxiliary wheel 15 and the second auxiliary wheel 16 in the up-down direction. However, the present invention is not limited to this example, and a configuration is also possible in which, as shown in FIG. 8, the drive wheel 12 is provided below both the first auxiliary wheel 15 and the second auxiliary wheel 16. Note that FIG. 8 shows an example in which the first auxiliary wheel 15 and the second auxiliary wheel 16 are arranged at the same position in the up-down direction, but the first auxiliary wheel 15 and the second auxiliary wheel 16 may be arranged at different positions in the up-down direction above the drive wheel 12. In contract to the example shown in FIG. 8, the drive wheel 12 may also be arranged above both the first auxiliary wheel 15 and the second auxiliary wheel 16. Also in this case, the first auxiliary wheel 15 and the second auxiliary wheel 16 may be arranged at the same position in the up-down direction or at different positions in the up-down direction. Note that in the example shown in FIG. 8, the auxiliary rails 4 include, in the lift path section 21, the passage sections through which the first auxiliary wheel 15 and the second auxiliary wheel 16 are separately pass. With this, even when the first auxiliary wheel 15 and the second auxiliary wheel 16 are arranged at different positions in the first direction D1, it is possible to appropriately support the first auxiliary wheel 15 and the second auxiliary wheel 16 using the auxiliary rails 4.
(3) The foregoing embodiment has described an example in which the lift path section 21 extends in the vertical direction and the connection path section 22 extends in the horizontal direction. However, the present invention is not limited to this example, and the lift path section 21 may extend in a direction inclined with respect to the vertical direction or may be formed in an arc shape when viewed in the second direction D2 (or may have in part an arc-shaped portion when viewed in the second direction D2). Also, the connection path section 22 may extend in a direction inclined with respect to the horizontal direction or may be formed in an arc shape when viewed in the second direction D2 (or may have in part an arc-shaped portion when viewed in the second direction D2).
(4) The foregoing embodiment has described an example in which the transport path 2 has the connection path section 22 extending in the direction intersecting with the up-down direction. However, the present invention is not limited to this example, and the transport path 2 does not necessarily include the connection path section 22. In this case, the lift path section 21 may have a configuration without including the second lift path section 212, or the lift path section 21 may have a configuration including the second lift path section 212. In the latter case, the transport facility 100 includes, individually, a transport carriage 1 that moves on the first lift path section 211 and a transport carriage 1 that moves on the second lift path section 212. Also, for example, the transport carriage 1 located on the second lift path section 212 receives an article G delivered to the first temporary storage section 61 by a transport carriage 1 located on the first lift path section 211, from the first temporary storage section 61, and delivers the received article G to the discharge section 7.
(5) The foregoing embodiment has described an example in which for each of the pair of drive wheels 12, a first restriction wheel 13 and a second restriction wheel 14 are provided coaxially with respect to the drive shaft 12a to restrict the position of the corresponding one of the pair of drive wheel 12 with respect to the corresponding drive rail 3. However, the present invention is not limited to this example, and for each of the pair of drive wheels 12, one of the first restriction wheel 13 and the second restriction wheel 14 may be provided. Alternatively, none of the first restriction wheel 13 and the second restriction wheel 14 may be provided.
(6) The foregoing embodiment has described an example in which the pair of guide surfaces 40 of the auxiliary rail 4 have, downstream of the cut-off section 44, a portion where the opposing distance of the pair of guide surfaces 40 in the transport width direction Dw gradually increases toward the cut-off section 44. However, the present invention is not limited to this example, and the opposing distance of the pair of guide surfaces 40 in the transport width direction Dw may be constant even in the vicinity of the cut-off section 44.
(7) The foregoing embodiment has described an example in which the holding apparatus 5 is provided at a position adjacent to the first lift path section 211 on the first side D11 in the first direction, the holding apparatus 5 including a plurality of holding sections 50 (transfer target places Z) that hold articles G successively transported to the holding sections 50. However, the holding apparatus 5 is not an essential component and is not necessarily included in the transport facility 100.
(8) The foregoing embodiment has described an example in which the discharge section 7 (transfer target place Z) for discharging articles G to the outside is provided at a position in the transport path 2. However, the discharge section 7 is not an essential component and is not necessarily included in the transport facility 100.
(9) The foregoing embodiment has described an example in which the temporary storage section 61 (transfer target place Z) capable of temporarily storing an article G is provided between the first lift path section 211 and the second lift path section 212 in the first direction D1. However, the temporary storage section 61 is not essential component and is not necessarily included in the transport facility 100.
(10) The foregoing embodiment has described an example in which the second temporary storage section 62 (transfer target place Z) capable of temporarily storing an article G is provided on the second side D12 in the first direction with respect to the second lift path section 212. However, the second temporary storage section 62 is not essential component and is not necessarily included in the transport facility 100.
(11) Note that the configuration disclosed in the above embodiment can also be applied in combination with configurations disclosed in other embodiments as long as no contradiction arises. Regarding other configurations as well, the embodiment disclosed in the present specification is merely an example in all respects. Accordingly, various modifications can be made as appropriate without departing from the gist of the present disclosure.

### [Overview of the Embodiment]

The following will describe the transport facility explained above.

A transport facility includes: a transport carriage configured to transport an article; and a transport path with a lift path section on which the transport carriage moves up and down,
letting a specific direction along a horizontal plane be a first direction, a direction orthogonal to the first direction in a plan view be a second direction, a direction along the transport path be a transport direction, and a direction orthogonal to the transport direction in a second direction view, which is a view along the second direction, be a transport width direction,
the transport path including: a pair of drive rails extending in the transport direction and spaced apart from each other in the second direction; and a pair of auxiliary rails spaced apart from each other in the second direction and located at positions in the transport width direction different from positions at which the pair of drive rails are located,
the drive rails each including a rail gear section extending in the transport direction,
the auxiliary rails each including a pair of guide surfaces extending in the transport direction and facing each other in the transport width direction,
the transport carriage including: a body located between the pair of drive rails in the second direction and between the pair of auxiliary rails in the second direction; a transfer section configured to transfer the article between transfer target places; a pair of drive wheels respectively provided with wheel gear sections configured to mesh with the rail gear sections of the pair of drive rails; a pair of first auxiliary wheels configured to be respectively guided in the pair of auxiliary rails; and a pair of second auxiliary wheels configured to be respectively guided in the pair of auxiliary rails,
the pair of drive wheels being coupled to a drive shaft protruding from the body outward in the second direction,
the pair of first auxiliary wheels and the pair of second auxiliary wheels being non-driven wheels supported in a manner as to rotate with respect to the body, and
at least two pairs of the pair of drive wheels, the pair of first auxiliary wheels, and the pair of second auxiliary wheels are located at different positions in an up-down direction.

According to this configuration, on each of two sides of the transport carriage in the second direction, the drive wheel, the first auxiliary wheel, and the second auxiliary wheel are supported on the corresponding rails. With this, a three-point support with the three wheels is realized on each of two sides of the transport carriage in the second direction. Also, at least two of the drive wheel, the first auxiliary wheel, and the second auxiliary wheel are located at different positions in the up-down direction. That is, since at least two wheels are supported at different positions in the up-down direction, it is easier to prevent the transport carriage from tilting in the up-down direction. Accordingly, it is possible to appropriately maintain the posture of the transport carriage that moves up and down on the lift path section. Furthermore, according to this configuration, since the pair of first auxiliary wheels and the pair of second auxiliary wheels are non-driven wheels, the number of drive sources mounted on the transport carriage can be reduced. It is thus possible to reduce the cost of the transport carriage.

Preferably, the transport path includes a connection path section connected to the lift path section and extending in a direction intersecting with the up-down direction,
the pair of drive rails and the pair of auxiliary rails are arranged so that the pair of drive wheels, the pair of first auxiliary wheels, and the pair of second auxiliary wheels have the same positional relationship in the first direction and the up-down direction between the lift path section and the connection path section,
the pair of drive rails are disposed outward of the pair of auxiliary rails in the second direction,
the transport path includes, at intersections at which the drive rails and the auxiliary rails respectively intersect with each other in the second direction view, cut-off sections separating the auxiliary rails, and
the cut-off sections are formed in a manner as to prevent a movement track of the drive shaft in response to the drive wheels passing through the intersections from interfering with the auxiliary rails.

According to this configuration, when the drive wheels pass through the intersections at which the drive rails and the auxiliary rails intersect with each other, it is possible to prevent the drive shaft from interfering with the auxiliary rails.

Preferably, the pair of guide surfaces of each of the auxiliary rails have, downstream of the corresponding cut-off section, a portion where an opposing distance of the pair of guide surfaces in the transport width direction gradually increases toward the cut-off section.

According to this configuration, when the first auxiliary wheel and the second auxiliary wheel that are being guided and moving on each auxiliary rail once disengage from the auxiliary rail at the cut-off section and re-enter the auxiliary rail, the first auxiliary wheel and the second auxiliary wheel can be appropriately guided on the auxiliary rail.

Preferably, the transport carriage further includes a first restriction wheel and a second restriction wheel for each of the pair of drive wheels, the first restriction wheel and the second restriction wheel being coaxial with respect to the drive shaft and configured to restrict a position of the drive wheel with respect to the corresponding drive rail, and
the pair of drive rails each includes: a first restriction surface extending in the transport direction and configured to restrict a movement of the corresponding first restriction wheel to one side in the transport width direction; and a second restriction surface extending in the transport direction and configured to restrict a movement of the corresponding second restriction wheel to another side in the transport width direction.

According to this configuration, as a result of a movement of the first restriction wheel and the second restriction wheel coupled to the drive shaft in the transport width direction being restricted by the first restriction surface and the second restriction surface, the position of the drive shaft with respect to the drive rail in the transport width direction can be restricted within a certain range. Accordingly, the position of the drive wheel coupled to the drive shaft with respect to the drive rail in the transport width direction can be stabilized. Therefore, it is easy to stabilize the state of meshing between the wheel gear section of the drive wheel and the rail gear section of the drive rail.

Preferably, the transport path includes a connection path section connected to the lift path section and extending in a direction intersecting with the up-down direction,
letting one side in the first direction be a first side in the first direction and another side in the first direction be a second side in the first direction,
the lift path section includes: a first lift path section; and a second lift path section spaced apart from the first lift path section to the second side in the first direction,
the connection path section includes: an upper connection path section connecting an upper end portion of the first lift path section and an upper end portion of the second lift path section; and a lower connection path section connecting a lower end portion of the first lift path section and a lower end portion of the second lift path section, and
the transport facility further includes:
   a holding apparatus located adjacent to the first lift path section on the first side in the first direction, the holding apparatus including a plurality of holding sections configured to hold articles successively transported to the holding sections, the plurality of holding sections serving as transfer target places;
   a temporary storage section located between the first lift path section and the second lift path section in the first direction, the temporary storage section serving as a transfer target place and being capable of temporarily storing an article; and
   a discharge section located at a position in the transport path, the discharge section serving as a transfer target place and being configured to discharge an article outward.

According to this configuration, an article held by the holding apparatus can be transported by the transport carriage along the transport path and can be appropriately discharged by the discharge section to the outside. Also, an article held by the holding apparatus can be received by the transport carriage and can be temporarily stored in the temporary storage section during the transport. The article stored in the temporary storage section is received by the transport carriage and is transported to the discharge section, depending on the transport situation. Thus, according to this configuration, an article held by the holding apparatus can be transported directly or indirectly to the discharge section, or can be stored in the temporary storage section, depending on the transport situation. Accordingly, it is easy to improve the transport efficiency of the entire facility.

Preferably, the temporary storage section serves as a first temporary storage section, and
the transport facility further includes: a second temporary storage section located on the second side in the first direction with respect to the second lift path section, the second temporary storage section being capable of temporarily storing an article.

According to this configuration, articles held by the holding apparatus can be received by the transport carriages, and can be temporarily stored in the first temporary storage section as well as in the second temporary storage section during the transport. Accordingly, it is easier to improve the transport efficiency of the entire facility.

### Industrial Applicability

The technology according to the present disclosure is applicable to a transport facility including a transport carriage configured to transport articles and a transport path with a lift path section on which the transport carriage moves up and down.

### Description of Reference Signs

- 100: Transport facility
- 1: Transport carriage
- 10: Body
- 11: Transfer section
- 12: Drive wheel
- 12a: Drive shaft
- 12g: Wheel gear section
- 13: First restriction wheel
- 14: Second restriction wheel
- 15: First auxiliary wheel
- 16: Second auxiliary wheel
- 2: Transport path
- 21: Lift path section
- 211: First lift path section
- 212: Second lift path section
- 22: Connection path section
- 22d: Lower connection path section
- 22u: Upper connection path section
- 3: Drive rail
- 30: Rail gear section
- 31: First restriction surface
- 32: Second restriction surface
- 4: Auxiliary rail
- 40: Guide surface
- 44: Cut-off section
- 5: Holding apparatus
- 50: Holding section
- 7: Discharge section
- 61: First temporary storage section (temporary storage section)
- 62: Second temporary storage section
- X: Intersection
- Z: Transfer target place
- G: Article
- D1: First direction
- D11: First side in the first direction
- D12: Second side in the first direction
- D2: Second direction
- Dt: Transport direction
- Dw: Transport width direction

## Claims

1. A transport facility comprising: a transport carriage configured to transport an article; and a transport path with a lift path section on which the transport carriage moves up and down,
letting a specific direction along a horizontal plane be a first direction, a direction orthogonal to the first direction in a plan view be a second direction, a direction along the transport path be a transport direction, and a direction orthogonal to the transport direction in a second direction view, which is a view along the second direction, be a transport width direction,
the transport path including: a pair of drive rails extending in the transport direction and spaced apart from each other in the second direction; and a pair of auxiliary rails spaced apart from each other in the second direction and located at positions in the transport width direction different from positions at which the pair of drive rails are located,
the drive rails each including a rail gear section extending in the transport direction,
the auxiliary rails each including a pair of guide surfaces extending in the transport direction and facing each other in the transport width direction,
the transport carriage including: a body located between the pair of drive rails in the second direction and between the pair of auxiliary rails in the second direction; a transfer section configured to transfer the article between transfer target places; a pair of drive wheels respectively provided with wheel gear sections configured to mesh with the rail gear sections of the pair of drive rails; a pair of first auxiliary wheels configured to be respectively guided in the pair of auxiliary rails; and a pair of second auxiliary wheels configured to be respectively guided in the pair of auxiliary rails,
the pair of drive wheels being coupled to a drive shaft protruding from the body outward in the second direction,
the pair of first auxiliary wheels and the pair of second auxiliary wheels being non-driven wheels supported in a manner as to rotate with respect to the body, and
at least two pairs of the pair of drive wheels, the pair of first auxiliary wheels, and the pair of second auxiliary wheels are located at different positions in an up-down direction.

2. The transport facility according to claim 1,
wherein the transport path includes a connection path section connected to the lift path section and extending in a direction intersecting with the up-down direction,
the pair of drive rails and the pair of auxiliary rails are arranged so that the pair of drive wheels, the pair of first auxiliary wheels, and the pair of second auxiliary wheels have the same positional relationship in the first direction and the up-down direction between the lift path section and the connection path section,
the pair of drive rails are disposed outward of the pair of auxiliary rails in the second direction,
the transport path includes, at intersections at which the drive rails and the auxiliary rails respectively intersect with each other in the second direction view, cut-off sections separating the auxiliary rails, and
the cut-off sections are formed in a manner as to prevent a movement track of the drive shaft in response to the drive wheels passing through the intersections from interfering with the auxiliary rails.

3. The transport facility according to claim 2,
wherein the pair of guide surfaces of each of the auxiliary rails have, downstream of the corresponding cut-off section, a portion where an opposing distance of the pair of guide surfaces in the transport width direction gradually increases toward the cut-off section.

4. The transport facility according to any one of claims 1 to 3,
wherein the transport carriage further includes a first restriction wheel and a second restriction wheel for each of the pair of drive wheels, the first restriction wheel and the second restriction wheel being coaxial with respect to the drive shaft and configured to restrict a position of the drive wheel with respect to the corresponding drive rail, and
the pair of drive rails each includes: a first restriction surface extending in the transport direction and configured to restrict a movement of the corresponding first restriction wheel to one side in the transport width direction; and a second restriction surface extending in the transport direction and configured to restrict a movement of the corresponding second restriction wheel to another side in the transport width direction.

5. The transport facility according to any one of claims 1 to 4,
wherein the transport path includes a connection path section connected to the lift path section and extending in a direction intersecting with the up-down direction,
letting one side in the first direction be a first side in the first direction and another side in the first direction be a second side in the first direction,
the lift path section includes: a first lift path section; and a second lift path section spaced apart from the first lift path section to the second side in the first direction,
the connection path section includes: an upper connection path section connecting an upper end portion of the first lift path section and an upper end portion of the second lift path section; and a lower connection path section connecting a lower end portion of the first lift path section and a lower end portion of the second lift path section, and
the transport facility further comprises:
a holding apparatus located adjacent to the first lift path section on the first side in the first direction, the holding apparatus including a plurality of holding sections configured to hold articles successively transported to the holding sections, the plurality of holding sections serving as transfer target places;
a temporary storage section located between the first lift path section and the second lift path section in the first direction, the temporary storage section serving as a transfer target place and being capable of temporarily storing an article; and
a discharge section located at a position in the transport path, the discharge section serving as a transfer target place and being configured to discharge an article outward.

6. The transport facility according to claim 5,
wherein the temporary storage section serves as a first temporary storage section, and
the transport facility further comprises: a second temporary storage section located on the second side in the first direction with respect to the second lift path section, the second temporary storage section being capable of temporarily storing an article.
